# EUROPEAN PATENT SPECIFICATION

(11) **EP 1 935 288 B1**
(45) Date of publication and mention of the grant of the patent: **05.08.2009**
(21) Application number: 07254786.2
(22) Date of filing: 11.12.2007
(51) Int. Cl.: A47C 1/025, B60N 2/20, B60N 2/235, B60N 2/12

(54) **Reclining mechanisms of vehicle seat**
Rücklehnungsmechanismus für einen Fahrzeugsitz
Mécanisme d'allongement d'un siège de véhicule

(30) Priority: 22.12.2006 JP 2006345449
(43) Date of publication of application: 25.06.2008
(73) Proprietor: Toyota Boshoku Kabushiki Kaisha, Kariya-shi, Aichi-ken (JP)
(72) Inventor: Uramichi, Hideki c/o Toyota Boshoku K.K., Aichi-ken (JP); Kumazaki, Yoshiyuki c/o Toyota Boshoku K.K., Aichi-ken (JP)
(74) Representative: Chettle, Adrian John

(56) References cited:
- WO-A-20/07050681
- US-A- 4 502 730
- US-A- 5 522 643
- US-A- 5 788 330
- US-B1- 6 513 868

## Description

The present invention relates to reclining mechanisms of a vehicle seat. More particularly, the present invention relates to reclining mechanisms of a vehicle seat, which mechanisms have memory functions to memorize or remember a predetermined rotational position (e.g., a use position) of a seat back such that the seat back can be directly returned to the predetermined rotational position from different rotational positions.

Conventionally, there is a vehicle seat (a front vehicle seat) having a walk-in function. That is, there is a vehicle seat that is arranged and constructed to make a space between the seat and a rear seat when a passenger gets in and out the rear seat. In particular, such a seat is arranged and constructed such that when an operation lever (a walk-in lever) is operated, a seat back of the seat is rotated forwardly from a predetermined rotational position or use (vertical) position to a rotated or tilted position while a seat cushion of the seat (the entire seat) is slid forwardly. According to this configuration, it is possible to easily make the space between the seat and the rear seat by simply operating the operation lever. Therefore, the passenger can easily get in and out the rear seat via the space.

Generally, in the vehicle seat having the walk-in function, the seat back is rotatably connected to the seat cushion via a special reclining mechanism, so as to be directly returned to the use position from the tilted position after completion of getting in and out of the passenger. Such a special reclining mechanism is taught, for example, by Japanese Laid-Open Patent Publication Number 2006-325918. The known reclining mechanism includes a seat reclining device for adjusting and locking an inclination angle (a rotational position) of the seat back with respect to the seat cushion, and a memory device that can mechanically remember the predetermined rotational position (the use position) of the seat back. In this mechanism, the seat reclining device is positioned between a back frame of the seat back and a cushion frame of the seat cushion. The seat reclining device thus positioned permits to controllably rotate the back frame with respect to the cushion frame, so as to adjust and lock the inclination angle of the seat back with respect to the seat cushion. Conversely, the memory device is positioned between the seat reclining device and the back frame and is partly connected to the seat reclining device. That is, the memory device is axially juxtaposed to the seat reclining device, so as to be partly connected to the seat reclining device. The memory device includes a first engagement element attached to the seat reclining device and a second engagement element attached to the back frame. The first and second engagement elements thus positioned are arranged and constructed to engage each other when the seat back is in the predetermined rotational position.

When a passenger gets in and out a vehicle, the operation lever is operated, so that the first and second engagement elements are disengaged from each other, thereby rotating the seat back forwardly. At this time, the seat cushion (the entire seat) moves or slides forwardly. As a result, the space for getting in and out of the passenger is formed behind the seat. Therefore, the passenger can easily get in and out the rear seat. Upon completion of getting in and out of the passenger, the seat back is rotated rearwardly toward the predetermined rotational position. When the seat back reaches the predetermined rotational position, the first and second engagement elements of the memory device engage each other. Thus, the seat back is automatically repositioned at the predetermined rotational position without additional operations. At the same time, the seat reclining device is locked so that the seat back can be locked at the predetermined rotational position.

However, as described above, in the known reclining mechanism, the memory device is axially juxtaposed to the seat reclining device, so as to be partly connected to the seat reclining device. As a result, a rotational force applied to the seat back from the passenger that is sitting on the seat can be applied to not only the reclining device but also the memory device. Therefore, if the vehicle accidentally collides, a large load can be applied to the memory device via the back frame. As a result, the memory device must be designed to have a high mechanical rigidity or strength so as to withstand such a large load. This may lead to an increased size and weight of the memory device.

It is, accordingly, one object of the present invention to provide an improved reclining mechanism having an improved memory device.

According to the present invention, wich is defined in claim 1, a seat reclining mechanism of a vehicle seat includes a seat reclining device that is capable of adjusting and locking a rotational position of a seat back, and a memory device that is arranged and constructed to memorize an original rotational position of the seat back, so that the seat back can be returned from a desired tilted position to the original rotational position. The seat reclining device rotatably connects the seat back to a fixed element such as a seat cushion. The seat reclining device can be switched between a locked condition in which the seat back can be prevented from rotating and an unlocked condition in which the seat back is capable of freely rotating. The seat reclining device in the locked condition is capable of withstanding a rotational force applied to the seat back from a passenger that is sitting on the seat. The memory device is radially juxtaposed to the seat reclining device and releasably engages the seat back and the fixed element.

According to the seat reclining mechanism thus constructed, the rotational force applied to the seat back from the passenger that is sitting on the seat is not substantially transmitted to the memory device. As a result, even when the vehicle accidentally collides, the memory device is effectively prevented from being applied with a load. Therefore, the memory device is not required to have a high rigidity. This may lead to downsizing of the memory device.

Further features of the invention are disclosed in the dependent claims.

In one embodiment of the invention, the memory device includes a first engagement mechanism that is capable of engaging the seat back and a second engagement mechanism that is capable of engaging the fixed element. The first and second engagement mechanisms are respectively linked to a switching mechanism that is capable of switching the seat reclining device between the locked condition and the unlocked condition. The seat reclining device can be locked when the first and second mechanisms respectively engage the seat back and the fixed element. The seat reclining device can be unlocked when the first or second mechanism is disengaged from the seat back or the fixed element. Also, when the first engagement mechanism is disengaged from the seat back, the seat back can be freely rotated from the original rotational position to the tilted position while the first engagement mechanism is maintained disengaged from the seat back, in which when the seat back is returned to the original rotational position from the tilted position, the first engagement mechanism can engage the seat back again, so that the seat back can be repositioned at the original rotational position. When the second engagement mechanism is disengaged from the fixed element, the seat back can be rotated to a desired rotational position relative to the fixed element, in which the seat back can be set to the desired rotational position by engaging the second engagement mechanism with the fixed element again at the desired rotational position.

In a further embodiment of the invention, the memory device includes a rotational member that is rotatably positioned on a rotational axis of the seat back and having an engagement notch and an outer convex teeth. The first engagement mechanism includes a hook member that is rotatably attached to the seat back so as to be engaged with and disengaged from the engagement notch of the rotational member. The second engagement mechanism includes a toothed member that is rotatably attached to the fixed element so as to be engaged with and disengaged from the outer teeth of the rotational member. When the seat back is rotated from the original rotational position toward the tilted position after the hook member is disengaged from the engagement notch of the rotational member, the hook member can move along an outer circumferential surface of the rotational member while contacting thereto, so that the hook member can engage the engagement notch when the seat back is returned to the original rotational position from the tilted position.

In a further embodiment of the invention, the toothed member can mesh with the outer teeth formed in the rotational member in synchronization with a locking motion of the seat reclining device.

In a still further embodiment of the invention, the seat reclining mechanism further includes a seat slide mechanism that is capable of sliding the entire seat forwardly when the first engagement mechanism is disengaged from the seat back.

Other objects and advantages of the present invention will be readily understood after reading the following detailed description together with the accompanying drawings and the claims.
FIG. 1 is a side view of a vehicle seat having a reclining mechanism of the present invention, which schematically illustrates motion of the vehicle seat;
FIG. 2 is a side view of the seat, which illustrates the reclining mechanism;
FIG. 3 is a cross-sectional view taken along line III-III in FIG. 2;
FIG. 4 is a side view of the seat, which illustrates the reclining mechanism in which a reclining lever is operated;
FIG. 5 is a side view of the seat, which illustrates the reclining mechanism in which a walk-in lever is operated;
FIG. 6 is a side view of the seat, which illustrates the reclining mechanism in which a seat back is rotated forwardly;
FIG. 7 is a cross-sectional view taken along line VII-VII in FIG. 2;
FIG. 8 is a cross-sectional view taken along line VIII-VIII in FIG. 2; and
FIG. 9 is a cross-sectional view taken along line IX-IX in FIG. 2.

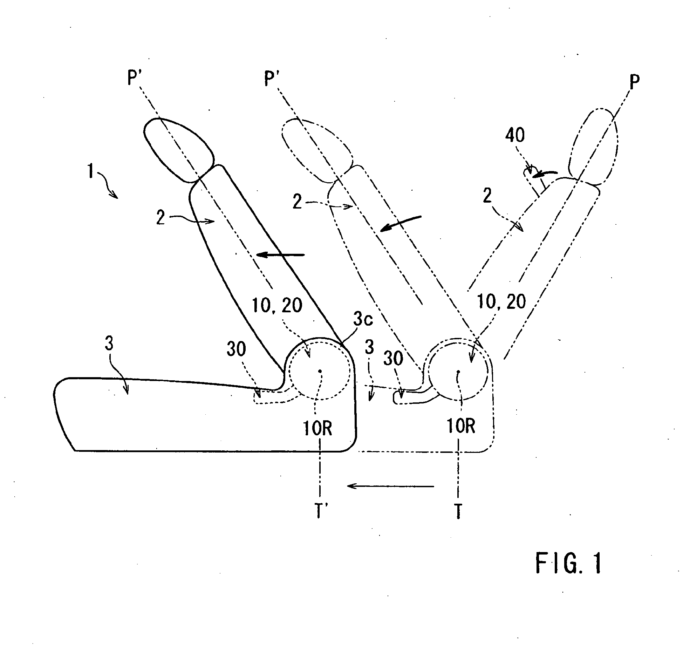

In the following, a detailed representative embodiment of the present invention will be described with reference to FIGS. 1 to 9.
Before describing the representative embodiment in detail, a summary of the representative embodiment will be provided. As shown in FIG. 1, a vehicle seat 1 includes a seat back 2 (a movable element) and a seat cushion 3 (a fixed element). The seat back 2 is rotatably connected to the seat cushion 3 via a pair of seat reclining mechanisms (one of which is shown), which may preferably include seat reclining devices 10 and memory devices 20. The seat reclining devices 10 allow the seat back 2 to be rotated forward and rearward (i.e., counterclockwise and clockwise) around a rotational axis 10R, and to be locked in a desired rotational position (inclination angle). This allows the seat back 2 to be adjusted to a desired tilted position relative to the seat cushion 3. Each of the seat reclining devices 10 is generally covered with a covering members 3C so as to be not visible externally.

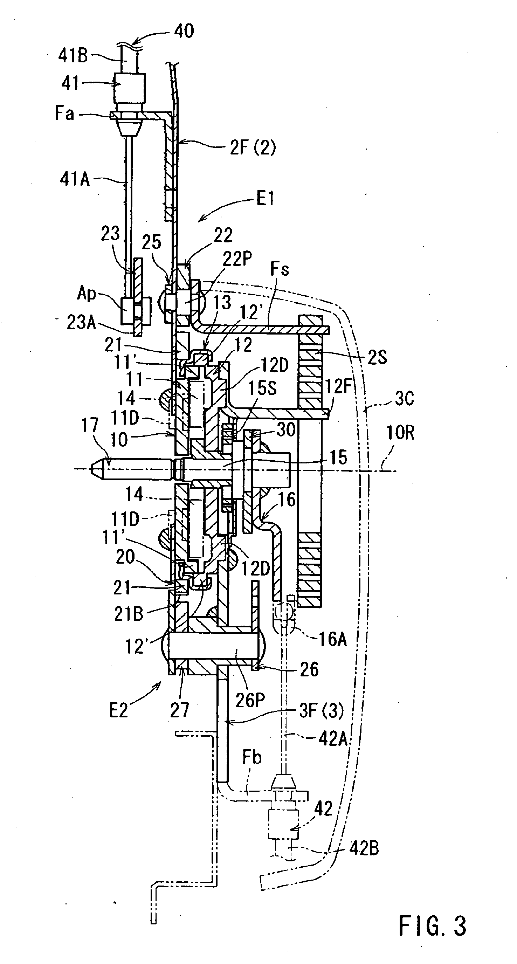

In addition, the seat reclining devices 10 are coupled to each other via a lateral rod 17 (FIG. 3), so as to be simultaneously or synchronously locked and unlocked by operating a reclining lever 30 that is coupled to the lateral rod 17. Therefore, the seat back 2 can be easily rotated relative to the seat cushion 3 by simply operating the reclining lever 30, thereby enabling the seat back 2 to be tilted relative to the seat cushion 3, and to be locked in the desired tilted position. Further, the seat reclining devices 10 are constructed so as to have a substantial strength in a locked condition thereof. Therefore, the seat reclining devices 10 in the locked condition can sufficiently withstand a rotational force applied to the seat back 2 from a passenger that is sitting on the seat 1.

Each of the seat reclining devices 10 may preferably include a torsion spring (a biasing spring) 2S that is positioned between the seat back 2 and the seat cushion 3 (FIG. 3). The torsion spring 2S may normally bias the seat back 2 forwardly. Therefore, the seat back 2 can be automatically rotated or tilted forwardly when the seat reclining devices 10 are unlocked by operating the reclining lever 30.

The seat 1 may preferably have a walk-in function. That is, the seat 1 is arranged and constructed to make a space between the seat 1 and a rear seat (not shown) when the passenger gets in and out the rear seat. In particular, the seat 1 is arranged and constructed such that when a walk-in lever (an operation lever) 40 is operated, the seat back 2 is rotated forwardly from a predetermined rotational position (an original or use position) P to a rotated or tilted position P' while the seat cushion 3 (the seat 1) is slid forwardly from a predetermined longitudinal position T to a slid position T' (FIG. 1). Therefore, a space can be made between the seat 1 and the rear seat by operating the walk-in lever 40, so that the passenger can easily get in and out the rear seat via the space.

As will be appreciated, after completion of getting in and out of the passenger, the seat back 2 must be returned to or repositioned at the predetermined rotational position P. To this end, each of the seat reclining devices 10 is combined with the memory device 20 that can memorize the predetermined rotational position P of the seat back 2. Therefore, the seat back 2 can be automatically repositioned at the predetermined rotational position P by simply rotating the seat back 2 rearwardly from the tilted position P' to the predetermined rotational position P. Thus, the seat back 2 can be automatically repositioned at the predetermined rotational position without additional operations.

The detailed representative embodiment will now described in detail. As shown in FIG. 3, the seat reclining device 10 includes a pair of opposing depressed disk-shaped housings, i.e., a first housing (a ratchet) 11 and a second housing (a guide) 12. The housings 11 and 12 are oppositely coupled to each other and are relatively rotatably connected by a fastener plate or clip ring 13 that is circumferentially attached thereto. In particular, the first housing 11 may preferably be received in the second housing 12 such that a flanged outer periphery 11' of the first housing 11 slidably contacts a flanged outer periphery 12' of the second housing 12. Further, the housings 11 and 12 are arranged and constructed so as to define an inner receiving space therebetween.

The first housing 11 has inner concave teeth (not shown) that are formed in an inner circumferential surface of the flanged outer periphery 11' thereof. Also, received in the inner receiving space of the housings 11 and 12 are a plurality of slide pawls 14 (one element of a switching mechanism) having outer convex teeth (not shown). The slide pawls 14 are radially slidably attached to the second housing 12, so that the outer teeth of the slide pawls 14 can be engaged with or disengaged from the inner teeth of the first housing 11. As will be appreciated, when the outer teeth of the slide pawls 14 are engaged with the inner teeth of the first housing 11, the first housing 11 may preferably be prevented from rotating relative to the second housing 12, so that the seat reclining device 10 can be locked. Conversely, when the outer teeth of the slide pawls 14 are disengaged from the inner teeth of the first housing 11, the first housing 11 may freely rotate relative to the second housing 12, so that the seat reclining device 10 can be unlocked.

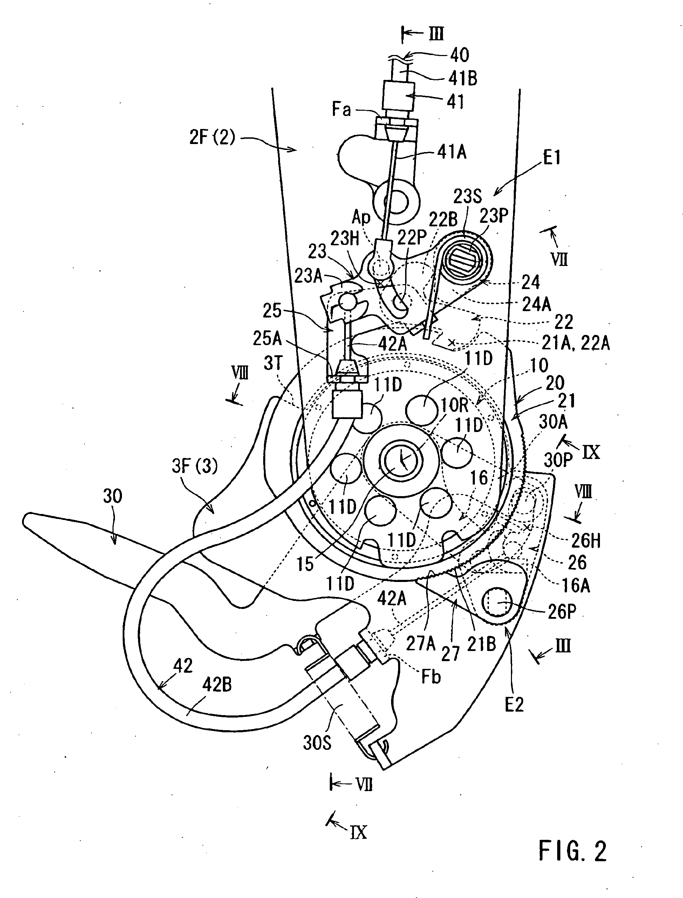

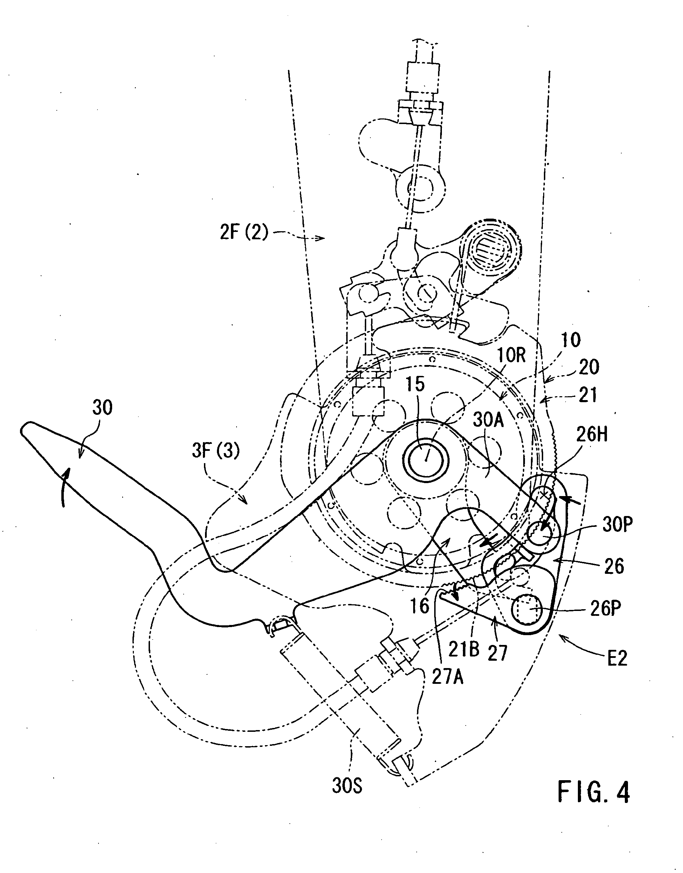

The slide pawls 14 are respectively associated with a switching or rotational shaft 15 (one element of the switching mechanism) that is positioned on the rotational axis 10R. The rotational shaft 15 extends passing through the first and second housings 11 and 12 and is connected to the lateral rod 17 (FIG. 3). Further, the rotational shaft 15 is provided with an operation handle or lever 16. Also, a torsion spring (a biasing spring) 15S is attached to the second housing 12. The torsion spring 15S biases the rotational shaft 15 in a predetermined rotational direction about the rotational axis 10R. That is, the torsion spring 15S biases the rotational shaft 15 such that the rotational shaft 15 is retained in a locked position. When the rotational shaft 15 is retained in the locked position, the slide pawls 14 are radially outwardly moved, so that the outer teeth of the slide pawls 14 engage the inner teeth of the first housing 11. In this state, the first housing 11 is prevented from rotating relative to the second housing 12, thereby locking the seat reclining device 10. Further, at this time, the operation handle 16 may generally have a rotational position shown in FIG. 2. When the rotational shaft 15 (the operation handle 16) is rotated against the spring force of the torsion spring 15S (clockwise in, for example, FIG. 4), the slide pawls 14 are radially inwardly moved, so that the outer teeth of the slide pawls 14 are disengaged from the inner teeth of the first housing 11, thereby unlocking the seat reclining device 10.

As shown in FIG. 3, the first housing 11 can be affixed to a back frame 2F of the seat back 2 by welding. Conversely, the second housing 12 can be affixed to a cushion frame 3F of the seat cushion 3 by welding. In particular, the first housing 11 is welded to the back frame 2F while dowels 11D formed therein are fitted into holes (not shown) formed in the back frame 2F. Similarly, the second housing 12 is welded to the cushion frame 3F while dowels 12D formed therein are fitted into holes (not shown) formed in the cushion frame 3F. Thus, the back frame 2F and the cushion frame 3F are reliably connected to each other via the seat reclining devices 10. In addition, the outer teeth of the slide pawls 14 and the inner teeth of the first housing 11 are respectively designed so as to firmly engage each other in the locked condition of the seat reclining device 10. Therefore, the seat reclining devices 10 in the locked condition can sufficiently withstand the rotational force applied to the seat back 2 from the passenger that is sitting on the seat 1.

An L-shaped frame 12F is attached to an outer surface of the second housing 12 by welding. Also, an L-shaped frame Fs is attached to the back frame 2F. In particular, the frame Fs is attached to a pivot pin 22P that is integrated with a fixture plate or base plate 25 (FIG. 3) fixedly connected to the back frame 2F, which will be described hereinafter. The torsion spring 2S as previously described is disposed between the frames 12F and Fs.

Further, the structure of the seat reclining device 10 is known and is found in, for example, U.S. Patent No. 6,910,737, the contents of which are hereby incorporated by reference.

Next, the structure of the memory device 20 will be described in detail.
As shown in FIG. 2, the memory device 20 is positioned adjacent to the seat reclining device 10. The memory device 20 includes an annular plate-shaped memory plate (a rotational member) 21, a first engagement mechanism E1 that can selectively anchor the memory plate 21 to the back frame 2F, and a second engagement mechanism E2 that can selectively anchor the memory plate 21 to the cushion frame 3F.

The memory plate 21 has an engagement notch 21A that is formed in an outer circumferential surface thereof. Also, the memory plate 21 has an outer convex teeth 21B that is formed in the outer circumferential surface thereof. As will be appreciated, the teeth 21B is circumferentially spaced away from the engagement notch 21A and extends over a substantial circumferential range.

As shown in FIG. 3, the memory plate 21 is positioned so as to encircle the seat reclining device 10. That is, the memory plate 21 is radially juxtaposed to the seat reclining device 10. In particular, as shown in FIG. 2, the memory plate 21 is outwardly loosely fitted to the clip ring 13 of the seat reclining device 10 while it is loosely sandwiched between the back frame 2F and the clip ring 13. Therefore, the memory plate 21 is capable of freely rotating around the seat reclining device 10 (about the rotational axis 10R) while it is prevented from axially moving.

As shown in, for example, FIG. 2, the first engagement mechanism E1 may essentially include a hook member 22 and a link arm or first operation plate 23. The hook member 22 is rotatably connected to a base plate 25 via the pivot pin 22P that is integrated with the base plate 25 (FIG. 3). Further, as best shown in FIG. 3, the base plate 25 is integrally connected to the back frame 2F. Also, a torsion spring (not shown) is disposed between the hook member 22 and the base plate 25, so that the hook member 22 is normally biased in a predetermined rotational direction (i.e., clockwise in FIG. 2) about the pivot pin 22P. As a result, as shown in FIGS. 2 and 4, a hook portion 22A of the hook member 22 may normally engage the engagement notch 21A of the memory plate 21. Thus, the memory plate 21 may preferably normally be anchored to the back frame 2F (i.e., the memory device 20 is joined to the back frame 2F). Naturally, when the hook member 22 is rotated counterclockwise against a spring force of the torsion spring about the pivot pin 22P, the hook portion 22A of the hook member 22 is disengaged from the engagement notch 21A of the memory plate 21, so that the memory plate 21 can be unanchored from the back frame 2F (i.e., the memory device 20 is unjoined from the back frame 2F).

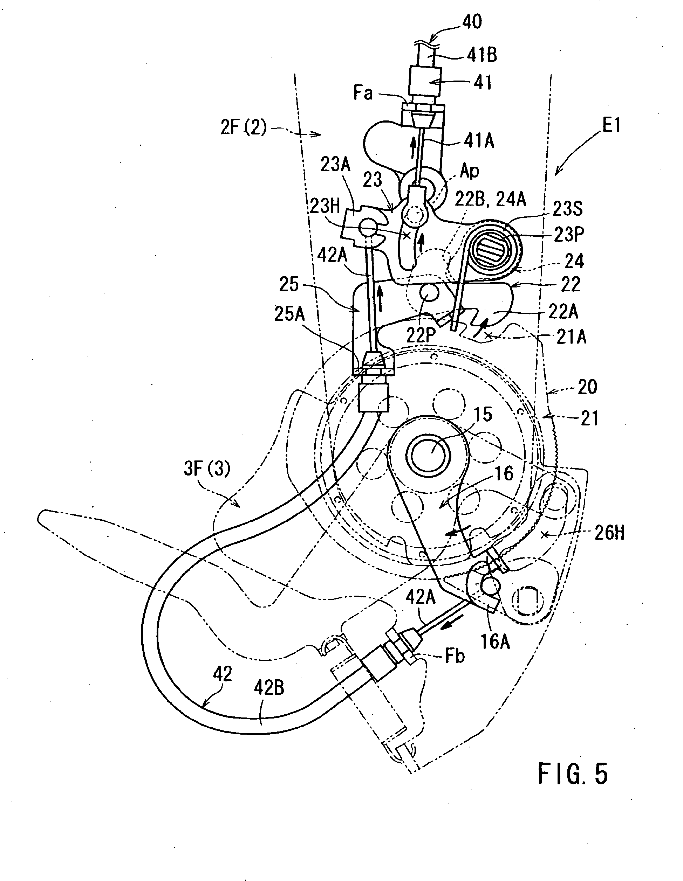

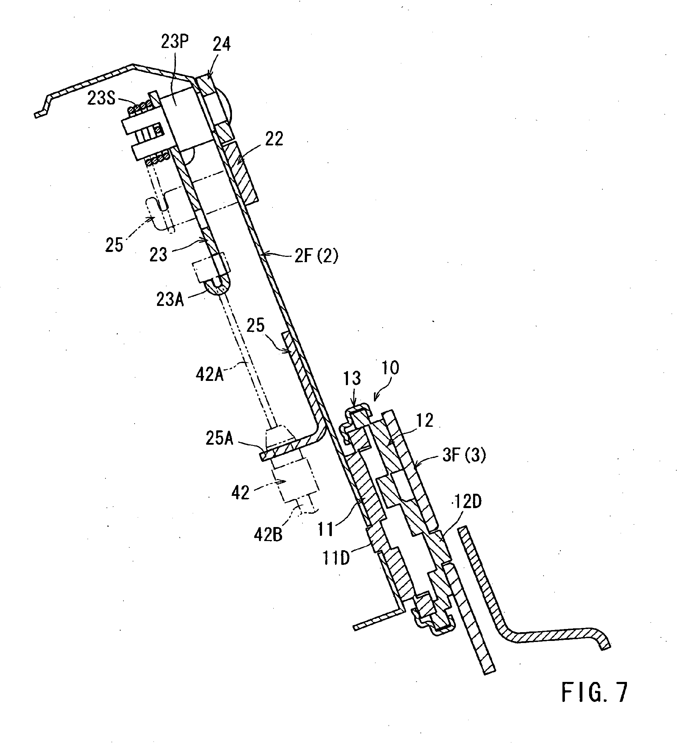

The first operation plate 23 is rotatably connected to the back frame 2F via a pivot pin 23P (FIG. 7). The pivot pin 23P is integrated with the first operation plate 23. As shown in FIG. 7, a torsion spring 23S is attached to the pivot pin 23P. The torsion spring 23S is engaged with the base plate 25, so that the first operation plate 23 is normally biased in a predetermined rotational direction (i.e., counterclockwise in FIG. 2) about the pivot pin 23P. Further, as best shown in FIG. 5, an elongated slot 23H is formed in the first operation plate 23. The elongated slot 23H may preferably be shaped so as to slidably receive an engagement pin Ap that is attached to an inner cable 41A of a first cable member 41 (which will be described hereinafter). Also, the first operation plate 23 has an inner cable connecting portion 23A. The inner cable connecting portion 23A is connected to an inner cable 42A of a second cable member 42 (which will be described hereinafter).

The first operation plate 23 has an operation cam 24 having a protruded cam portion 24A. As shown in FIG. 7, the operation cam 24 is integrally connected to the connecting pin 23P, so as to integrally rotate with the first operation plate 23 about an axis of the connecting pin 23P.

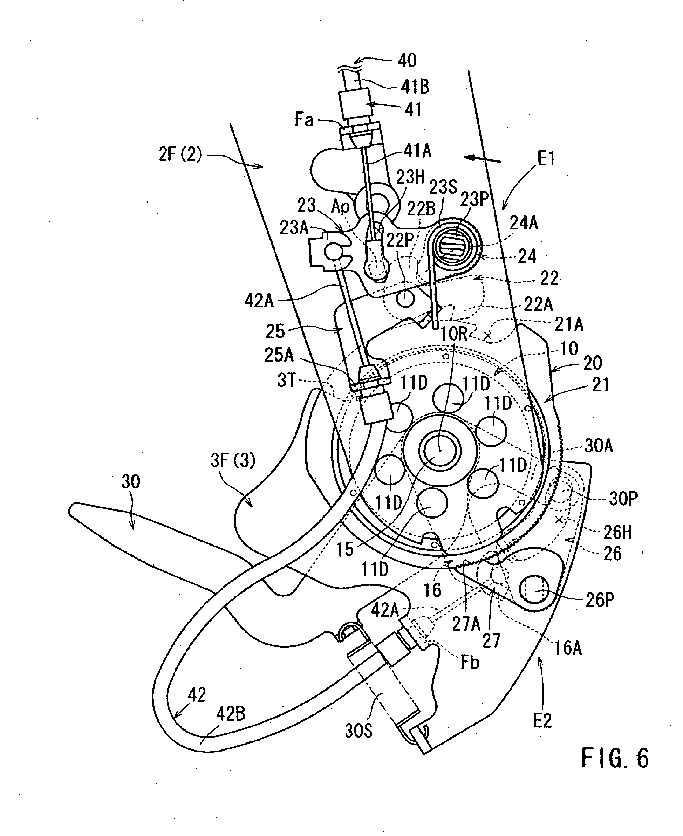

As shown in, for example, FIG. 4, the second engagement mechanism E2 may essentially include a second operation plate 26 and a toothed member 27. The second operation plate 26 is rotatably connected to the cushion frame 3F via a pivot pin 26P that is integrated with the second operation plate 26 (FIG. 3). As best shown in FIG. 6, an elongated slot 26H is formed in the second operation plate 26. The elongated slot 26H may preferably be shaped so as to slidably receive an engagement pin 30P that is attached to an arm portion 30A of the reclining lever 30. Further, the elongated slot 26H may preferably be shaped such that when the reclining lever 30 is pulled or rotated upwardly, the engagement pin 30P moves downwardly along the elongated slot 26H, thereby rotating the second operation plate 26 counterclockwise about the pivot pin 26P.

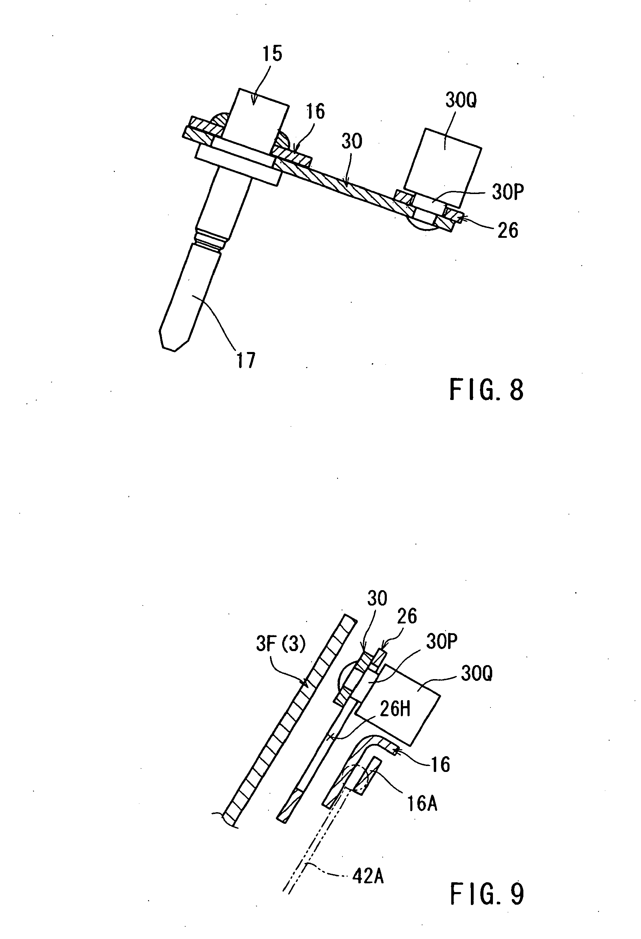

As shown in FIG. 9, the engagement pin 30P of the reclining lever 30 has a functional member 30Q. The functional member 30Q is arranged and constructed to contact and push the operation handle 16 when the reclining lever 30 is pulled upwardly (clockwise). Therefore, as shown in FIG. 4, when the reclining lever 30 is pulled upwardly, the operation handle 16 is pushed by the functional member 30Q and is rotated clockwise together with the reclining lever 30, so that the seat reclining device 10 can be unlocked (i.e., the seat reclining device 10 can be switched to an unlocked condition.

Further, as shown in, for example, FIG. 2, a tension spring 30S is disposed between the reclining lever 30 and the cushion frame 3F, so that the reclining lever 30 may preferably normally be biased downwardly (counterclockwise). Therefore, unless the reclining lever 30 is pulled upwardly, the operation handle 16 is retained in the rotational position shown in FIG. 2, so that the seat reclining device 10 is maintained in the locked condition.

The toothed member 27 is integrally connected to the second operation plate 26. That is, as shown in FIG. 3, the toothed member 27 is integrated with the connecting pin 26P that is integrated with the second operation plate 26. Therefore, the toothed member 27 can rotate together with the second operation plate 26. As shown in FIG. 2, the toothed member 27 is positioned such that inner teeth 27A formed therein can mesh with the outer teeth 21B formed in the memory plate 21 when the reclining lever 30 is not pulled upwardly (i.e., when the seat reclining device 10 is in the locked condition). As a result, when the reclining lever 30 is not operated, the memory plate 21 is anchored to the cushion frame 3F (i.e., the memory device 20 is joined to the cushion frame 3F). However, as described above, when the reclining lever 30 is pulled upwardly, the second operation plate 26 is rotated counterclockwise about the pivot pin 26P (FIG. 4). At this time, the toothed member 27 is rotated in the same direction with the second operation plate 26, so that the inner teeth 27A are disengaged from the outer teeth 21 B of the memory plate 21. Thus, the memory plate 21 can be unanchored from the cushion frame 3F (i.e., the memory device 20 can be unjoined from the cushion frame 3F).

Further, the inner teeth 27A of the toothed member 27 and the outer teeth 21 B of the memory plate 21 are arranged and constructed to engage each other while the outer teeth of the slide pawls 14 engage the inner teeth of the first housing 11. In other words, the inner teeth 27A and the outer teeth 21 B has the same rotational pitch alignment as the outer teeth of the slide pawls 14 and the inner teeth of the first housing 11. Therefore, when the reclining lever 30 is released, the inner teeth 27A formed in the toothed member 27 can mesh with the outer teeth 21 B formed in the memory plate 21 in synchronization with the engagement of the outer teeth of the slide pawls 14 and the inner teeth of the first housing 11. That is, the memory device 20 can be joined to the cushion frame 3F in synchronization with a locking motion of the seat reclining device 10. Thus, the seat back 2 can be set to a desired tilted position relative to the fixed element 3 and at the same time, the desired tilted position of the seat back 2 can be memorized.

Further, the inner cable 42A of the second cable member 42 is movably received in a tubular outer cable 42B. As shown in FIGS. 2 and 7, an upper end of the inner cable 42A is connected to the inner cable connecting portion 23A of the first operation plate 23. Conversely, a lower end of the inner cable 42A is connected to an inner cable connecting portion 16A attached to an end of the operation handle 16. Also, an upper end of the outer cable 42B of the second cable member 42 is connected to a flanged outer cable connecting portion 25A of the base plate 25 that is connected to the back frame 2F. Conversely, a lower end of the outer cable 42B is connected to an outer cable connector member Fb that is attached to the cushion frame 3F.

Similarly, the inner cable 41A of the first cable member 41 is movably received in a tubular outer cable 41 B. As shown in FIGS. 2 and 3, an upper end of the inner cable 41A is connected to the walk-in lever 40, so as to be pulled upwardly when the walk-in lever 40 is operated. Conversely, a lower end of the inner cable 41A is connected to the engagement pin Ap that is slidably received in the elongated slot 23H of the first operation plate 23. Also, an upper end of the outer cable 41B is fixed to the back frame 2F. Conversely, a lower end of the outer cable 41 B is connected to a flanged outer cable connector member Fa that is attached to the back frame 2F.

Thus, the first and second engagement mechanisms E1 and E2 may preferably be linked to each other. Therefore, when the walk-in lever 40 is operated, the inner cable 41 A of the first cable member 41 is pulled upwardly. As a result, as shown in FIG. 5, the first operation plate 23 is rotated clockwise against a spring force of the torsion spring 23S. At this time, the operation cam 24 rotates clockwise together with the first operation plate 23, so that an extended functional portion 22B of the hook member 22 is pressed by the cam portion 24A of the operation cam 24. As a result, the hook member 22 is rotated counterclockwise against a biasing force of the torsion spring (not shown), so that the hook portion 22A of the hook member 22 is disengaged from the engagement notch 21A of the memory plate 21.

In addition, upon rotation of the first operation plate 23, the inner cable 42A of the second cable member 42 is pulled upwardly, so that the operation handle 16 is rotated clockwise. As a result, the rotational shaft 15 is rotated, so that the seat reclining device 10 can be unlocked.
Further, a biasing spring (not shown) is attached to the walk-in lever 40. That is, the walk-in lever 40 is arranged and constructed so as to be automatically returned to a predetermined (normal) position when it is not operated, so that the seat reclining device 10 can be normally locked.

Operation of the seat reclining mechanism (the seat reclining device 10 and the memory device 20) will now be described.
First, in order to adjust and lock the rotational position of the seat back 2 with respect to the seat cushion 3, as shown in FIG. 4, the reclining lever 30 is pulled upwardly (rotated clockwise). As a result, the operation handle 16 is pushed by the functional member 30Q of the reclining lever 30 and is rotated clockwise. At the same time, the second operation plate 26 and the toothed member 27 are rotated counterclockwise about the pivot pin 26P. As a result, the seat reclining device 10 can be unlocked. At the same time, the inner teeth 27A of the toothed member 27 are disengaged from the outer teeth 21 B of the memory plate 21. That is, the memory plate 21 is unanchored from the cushion frame 3F. Thus, the seat back 2 can be rotated forwardly and rearwardly relative to the seat cushion 3, so as to be adjusted to the desired rotational position relative to the seat cushion 3. At this time, the memory plate 21 can be rotated with the seat back 2 because the hook portion 22A of the hook member 22 remains engaged with the engagement notch 21 A of the memory plate 21.

Thereafter, when the reclining lever 30 is released, operation handle 16 is rotated counterclockwise, so that the seat reclining device 10 can be locked again. At the same time, the toothed member 27 is rotated clockwise about the pivot pin 26P. As a result, the inner teeth 27A of the toothed member 27 engage the outer teeth 21B of the memory plate 21. Thus, the seat back 2 can be adjusted and locked to the desired tilting position relative to the seat cushion 3.

Alternatively, in order to shift the seat back 2 from the original position P to the tilted position P', as shown in FIG. 5, the walk-in lever 40 is operated (FIG. 1), so that the inner cable 41A of the first cable member 41 is pulled upwardly. As a result, the first operation plate 23 is rotated clockwise against the spring force of the torsion spring 23S. At this time, the operation cam 24 rotates clockwise together with the first operation plate 23, so that the extended functional portion 22B of the hook member 22 is pressed by the cam portion 24A of the operation cam 24. As a result, the hook member 22 is rotated counterclockwise against the biasing force of the torsion spring (not shown), so that the hook portion 22A of the hook member 22 is disengaged from the engagement notch 21A of the memory plate 21. That is, the memory plate 21 is unanchored from the back frame 2F. Conversely, upon rotation of the first operation plate 23, the inner cable 42A of the second cable member 42 is pulled upwardly, so that the operation handle 16 is rotated clockwise. As a result, the seat reclining device 10 can be unlocked. Thus, the seat back 2 can be rotated relative to the seat cushion 3. However, because the seat back 2 is normally biased forwardly by the torsion spring 2S, the seat back 2 can be automatically rotated or tilted forwardly (counterclockwise).

As will be recognized, at this time, the inner teeth 27A of the toothed member 27 are not disengaged from the outer teeth 21B of the memory plate 21 because the toothed member 27 is not rotated. Therefore, the memory plate 21 remains anchored to the cushion frame 3F. That is, the memory plate 21 cannot be rotated with the seat back 2.
Also, as will be apparent from FIG. 6, when the seat back 2 is rotated forwardly, the hook member 22 moves along the outer circumferential surface of the memory plate 21 while the hook portion 22A thereof contacts the outer circumferential surface of the memory plate 21. At this time, the cam portion 24A of the operation cam 24 contacts the hook member 22, so that the operation cam 24 can be prevented from rotating counterclockwise. As a result, the first operation plate 23 can also be prevented from rotating counterclockwise. Thus, even if the walk-in lever 40 is released, the seat reclining device 10 remains unlocked, so that the seat back 2 can be automatically rotated forwardly.

Further, as shown in FIG. 3, a shouldered stopper portion 3T may preferably be formed in the cushion frame 3F. The stopper portion 3T is arranged and constructed to engage the L-shaped frame Fs attached to the back frame 2F when the seat back is rotated forwardly. Therefore, when the walk-in lever 40 is operated, the seat back 2 can be automatically rotated forwardly until the L-shaped frame Fs of the seat back 2 contacts the stopper portion 3T of the cushion frame 3F.

Also, as previously described, when the walk-in lever 40 is operated, a seat slide mechanism (not shown) is actuated, so that the seat cushion 3 (the entire seat 1) is simultaneously slid forwardly from the predetermined longitudinal position T to the slid position T'. Thus, when the walk-in lever 40 is operated, the seat back 2 is rotated forwardly from the predetermined rotational position P to the tilted position P' while the seat cushion 3 (the seat 1) is slid forwardly from the predetermined longitudinal position T to the slid position T' (FIG. 1).

In order to return the seat back 2 from the tilted position P' to the original position P, as shown in FIG. 5, the seat cushion 3 is moved from the slid position T' to the predetermined longitudinal position T by operating the seat slide mechanism. Thereafter, the seat back 2 is simply pushed rearwardly, so as to be rotated clockwise against the spring force of the torsion spring 2S. At this time, the hook member 22 reversely moves along the outer circumferential surface of the memory plate 21 while the hook portion 22A thereof contacts the outer circumferential surface of the memory plate 21. When the seat back 2 reaches the use position P, the hook member 22 is rotated clockwise by the torsion spring (not shown), so that the hook portion 22A thereof engage the engagement notch 21A of the memory plate 21. As a result, the memory plate 21 is anchored to the back frame 2F again. Further, upon rotation of the hook member 22, the operation cam 24 rotates counterclockwise. As a result, the first operation plate 23 dependently rotates counterclockwise, so that the inner cable 42A of the second cable member 42 is loosened. As a result, the operation handle 16 is rotated counterclockwise. As a result, the rotational shaft 15 is rotated in the same direction, so that the seat reclining device 10 is locked again. Thus, the seat back 2 is repositioned at and locked to the original position P.

According to the present seat reclining mechanisms, the seat back 2 can be easily returned from the tilted position P' to the original position P while the seat cushion 3 is slid rearwardly from the slid position T' to the predetermined longitudinal position T. Further, the rotational force applied to the seat back 2 from the passenger that is sitting on the seat 1 is not substantially applied to the memory device 20. As a result, even when the vehicle accidentally collides, a large load cannot substantially be applied to the memory device 20 via the back frame 2F. Therefore, the memory device 20 is not required to have a high mechanical rigidity or strength. This may lead to downsizing of the memory device 20.

The seat reclining mechanisms can be applied to a seat in which the seat back 2 should be rotatably connected to a vehicle floor (the fixed element). That is, the seat reclining mechanisms can be applied to a seat that does not have the walk-in function.

A representative example of the present invention has been described in detail with reference to the attached drawings. This detailed description is merely intended to teach a person of skill in the art further details for practicing preferred aspects of the present invention and is not intended to limit the scope of the invention. Only the claims define the scope of the claimed invention. Therefore, combinations of features and steps disclosed in the foregoing detailed description may not be necessary to practice the invention in the broadest sense, and are instead taught merely to particularly describe detailed representative examples of the invention.

## Claims

1. A seat reclining mechanism of a vehicle seat (1), comprising:
a seat reclining device (10) that is capable of adjusting and locking a rotational position of a seat back (2); and
a memory device (20) that is arranged and constructed to memorize an original rotational position (P) of the seat back (2), so that the seat back (2) can be returned from a desired tilted position (P') to the original rotational position (P),
wherein the seat reclining device (10) rotatably connects the seat back (2) to a fixed element such as a seat cushion (3),
wherein the seat reclining device (10) can be switched between a locked condition in which the seat back (2) can be prevented from rotating and an unlocked condition in which the seat back (2) is capable of freely rotating,
wherein the seat reclining device (10) in the locked condition is capable of withstanding a rotational force applied to the seat back (2) from a passenger that is sitting on the seat (1), and
wherein the memory device (20) is radially juxtaposed to the seat reclining device (10) and releasably engages the seat back (2) and the fixed element (3).

2. The seat reclining mechanism as defined in claim 1, wherein the memory device (20) includes a first engagement mechanism (E1) that is capable of engaging the seat back (2) and a second engagement mechanism (E2) that is capable of engaging the fixed element (3),
wherein the first and second engagement mechanisms (E1 and E2) are respectively linked to a switching mechanism (14 and 15) that is capable of switching the seat reclining device (10) between the locked condition and the unlocked condition, such that the seat reclining device (10) can be locked when the first and second mechanisms (E1 and E2) respectively engage the seat back (2) and the fixed element (3), and such that the seat reclining device (10) can be unlocked when the first or second mechanism (E1 or E2) is disengaged from the seat back (2) or the fixed element (3),
wherein when the first engagement mechanism (E1) is disengaged from the seat back (2), the seat back (2) can be freely rotated from the original rotational position (P) to the tilted position (P') while the first engagement mechanism (E1) is maintained disengaged from the seat back (2), in which when the seat back (2) is returned to the original rotational position (P) from the tilted position (P'), the first engagement mechanism (E1) can engage the seat back (2) again, so that the seat back (2) can be repositioned at the original rotational position (P), and
wherein when the second engagement mechanism (E2) is disengaged from the fixed element (3), the seat back (2) can be rotated to a desired rotational position relative to the fixed element (3), in which the seat back (2) can be set to the desired rotational position by engaging the second engagement mechanism (E2) with the fixed element (3) again at the desired rotational position.

3. The seat reclining mechanism as defined in claim 2, wherein the memory device (20) includes a rotational member (21) that is rotatably positioned on a rotational axis (10R) of the seat back (2) and having an engagement notch (21 A) and an outer convex teeth (21B),
wherein the first engagement mechanism (E1) includes a hook member (22) that is rotatably attached to the seat back (2) so as to be engaged with and disengaged from the engagement notch (21A) of the rotational member (21),
wherein the second engagement mechanism (E2) includes a toothed member (27) that is rotatably attached to the fixed element (3) so as to be engaged with and disengaged from the outer teeth (21B) of the rotational member (21),
wherein when the seat back (2) is rotated from the original rotational position (P) toward the tilted position (P') after the hook member (22) is disengaged from the engagement notch (21A) of the rotational member (21), the hook member (22) can move along an outer circumferential surface of the rotational member (21) while contacting thereto, so that the hook member (22) can engage the engagement notch (21A) when the seat back (2) is returned to the original rotational position (P) from the tilted position (P'), and
wherein the toothed member (27) is capable of engaging the outer teeth (21B) of the rotational member (21) at the desired rotational position of the seat back (2).

4. The seat reclining mechanism as defined in claim 3, wherein the toothed member (27) can mesh with the outer teeth (21B) formed in the rotational member (21) in synchronization with a locking motion of the seat reclining device (10).

5. The seat reclining mechanism as defined in any one of claims 2-4 further comprising a seat slide mechanism (not shown) that is capable of sliding the entire seat forwardly when the first engagement mechanism (E1) is disengaged from the seat back (2).

## Patentansprüche

1. Lehneneinstellmechanismus für einen Fahrzeugsitz (1) mit:
einer Lehneneinstellvorrichtung (10) zum Speichern und Verriegeln einer Drehstellung einer Sitzlehne (2); und
einer Speichervorrichtung (20) zum Speichern einer ursprünglichen Drehstellung (P) der Sitzlehne (2), so dass die Sitzlehne (2) aus einer gewünschten Neigungsstellung (P') in die ursprüngliche Drehstellung (P) zurückgestellt werden kann,
wobei die Lehneneinstellvorrichtung (10) die Sitzlehne (2) mit einem feststehenden Element, wie zum Beispiel einem Sitzkissen (3), drehbar verbindet,
wobei die Lehneneinstellvorrichtung (10) zwischen einem Verriegelungszustand, in dem die Sitzlehne (2) nicht drehen kann, und einem Entriegelungszustand geschaltet werden kann, in dem die Sitzlehne (2) frei drehen kann,
wobei die Lehneneinstellvorrichtung (10) im Verriegelungszustand einer Drehkraft standhalten kann, die ein auf dem Sitz (1) sitzender Insassen auf die Sitzlehne (2) aufbringt, und
wobei die Speichervorrichtung (20) radial gegenüber der Lehneneinstellvorrichtung (10) angeordnet ist und mit der Sitzlehne (2) und dem feststehenden Element (3) lösbar in Eingriff steht.

2. Lehneneinstellmechanismus nach Anspruch 1, wobei die Speichervorrichtung (20) einen ersten Eingriffsmechanismus (E1) aufweist, der mit der Sitzlehne (2) in Eingriff bringbar ist, und einen zweiten Eingriffsmechanismus (E2), der mit dem feststehenden Element (3) in Eingriff bringbar ist,
wobei der erste und zweite Eingriffsmechanismus (E1 und E2) jeweils in der Weise mit einem Schaltmechanismus (14 und 15) zum Schalten der Lehneneinstellvorrichtung (10) zwischen dem Verriegelungszustand und dem Entriegelungszustand verbunden sind, dass die Lehneneinstellvorrichtung (10) verriegelt werden kann, wenn der erste und zweite Mechanismus (E1 und E2) mit der Sitzlehne (2) bzw. dem feststehenden Element (3) in Eingriff stehen, und entriegelt werden kann, wenn der erste oder zweite Mechanismus (E1 und E2) außer Eingriff mit der Sitzlehne (2) bzw. dem feststehenden Element (3) steht,
wobei, wenn der erste Eingriffsmechanismus (E1) außer Eingriff mit der Sitzlehne (2) steht, die Sitzlehne (2) aus der ursprünglichen Drehstellung (P) in die Neigungsstellung (P') frei gedreht werden kann, während der erste Eingriffsmechanismus (E1) außer Eingriff mit der Sitzlehne (2) gehalten wird, und wobei, wenn die Sitzlehne (2) aus der Neigungsstellung (P') in die ursprüngliche Drehstellung (P) zurückgestellt wird, der erste Eingriffsmechanismus (E1) wieder in Eingriff mit der Sitzlehne (2) gebracht werden kann, so dass die Sitzlehne (2) in die ursprüngliche Drehstellung (P) zurückgestellt werden kann, und
wobei, wenn der zweite Eingriffsmechanismus (E2) außer Eingriff mit dem feststehenden Element (3) steht, die Sitzlehne (2) relativ zum feststehenden Element (3) in eine gewünschte Drehstellung gedreht werden kann, und wobei die Sitzlehne (2) in der gewünschten Drehstellung eingestellt werden kann, indem der zweite Eingriffsmechanismus (E2) in der gewünschten Drehstellung wieder in Eingriff mit dem feststehenden Element (3) gebracht wird.

3. Lehneneinstellmechanismus nach Anspruch 2, wobei die Speichervorrichtung (20) ein auf einer Drehachse (10R) der Sitzlehne (2) drehbar positioniertes Drehelement (21) mit einer Eingriffskerbe (21A) und einer konvexen Außenverzahnung (21 B) aufweist,
wobei der erste Eingriffsmechanismus (E1) ein Hakenelement (22) aufweist, das an der Sitzlehne (2) in der Weise drehbar angebracht ist, dass es in oder außer Eingriff mit der Eingriffskerbe (21A) des Drehelements (21) gebracht wird,
wobei der zweite Eingriffsmechanismus (E2) ein verzahntes Element (27) aufweist, das am feststehenden Element (3) in der Weise drehbar angebracht ist, dass es in oder außer Eingriff mit der Außenverzahnung (21 B) des Drehelements (21) gebracht wird,
wobei, wenn die Sitzlehne (2) aus der ursprünglichen Drehstellung (P) zur Neigungsstellung (P') hin gedreht wird, nachdem das Hakenelement (22) außer Eingriff mit der Eingriffskerbe (21A) des Drehelements (21) gebracht wurde, das Hakenelement (22) sich entlang einer Außenumfangsfläche des Drehelements (21) in Kontakt mit dieser bewegen kann, so dass es in Eingriff mit der Eingriffskerbe (21A) kommen kann, wenn die Sitzlehne (2) aus der Neigungsstellung (P') in die ursprüngliche Drehstellung (P) zurückgestellt wird, und
wobei das verzahnte Element (27) in der gewünschten Drehstellung der Sitzlehne (2) in Eingriff mit der Außenverzahnung (21 B) des Drehelements (21) kommen kann.

4. Lehneneinstellmechanismus nach Anspruch 3, wobei das verzahnte Element (27) in die am Drehelement (21) ausgebildete Außenverzahnung (21 B) synchron mit einer Verriegelungsbewegung der Lehneneinstellvorrichtung (10) eingreifen kann.

5. Lehneneinstellmechanismus nach einem der Ansprüche 2-4, mit des Weiteren einem Sitzschiebemechanismus (nicht dargestellt) zum Vorwärtsschieben des gesamten Sitzes, wenn der erste Eingriffsmechanismus (E1) außer Eingriff mit der Sitzlehne (2) steht.

## Revendications

1. Mécanisme d'inclinaison d'un siège de véhicule (1), comprenant :
un dispositif d'inclinaison de siège (10), capable d'ajuster et de verrouiller une position en rotation d'un dossier de siège (2) ; et
un dispositif mémoire dispositif mémoire (20), agencé et construit pour mémoriser une position en rotation originelle (P) du dossier de siège (2), de manière que le dossier de siège (2) puisse être ramené d'une position inclinée (P') souhaitée à la position originelle de rotation (P),
dans lequel le dispositif d'inclinaison de siège (10) relie en rotation le dossier de siège (2) à un élément fixe, tel qu'un coussin de siège (3),
dans lequel le dispositif d'inclinaison de siège (10) peut être commuté entre un état verrouillé, dans lequel le dossier de siège (2) peut être empêché de tourner, et un état non verrouillé, dans lequel le dossier de siège (2) est capable de tourner librement,
dans lequel le dispositif d'inclinaison de siège (10), à l'état verrouillé, est capable de résister à une force de rotation appliquée au dossier de siège (2) par un passager, assis sur le siège (1), et
dans lequel le dispositif mémoire (20) est juxtaposé radialement au dispositif d'inclinaison de siège (10) et met en prise, de façon désolidarisable, le dossier de siège (2) et l'élément fixe (3).

2. Mécanisme d'inclinaison selon la revendication 1, dans lequel le dispositif mémoire (20) comprend un premier mécanisme de mise en prise (E1), capable de venir en prise avec le dossier de siège (2) et un deuxième mécanisme de mise en prise (E2), capable de venir en prise avec l'élément fixe (3),
dans lequel les premier et deuxième mécanismes de mise en prise (E1 et E2) sont respectivement reliés à un mécanisme de commutation (14 et 15) capable de commuter le dispositif d'inclinaison de siège (10) entre l'état verrouillé et l'état non verrouillé, de manière que le dispositif d'inclinaison de siège (10) puisse être verrouillé lorsque les premier et deuxième mécanismes de mise en prise (E1 et E2) viennent respectivement en prise avec le dossier de siège (2) et l'élément fixe (3), et de manière que le dispositif d'inclinaison de siège (10) puisse être déverrouillé, lorsque le premier ou deuxième mécanisme de mise en prise (E1 ou E2) est mis hors de prise du dossier de siège (2), ou de l'élément fixe (3),
dans lequel, lorsque le premier mécanisme de mise en prise (E1) est mis hors de prise du dossier de siège (2), le dossier de siège (2) peut être librement tourné, de la position originelle en rotation (P) à la position inclinée (P'), tandis que le premier mécanisme de mise en prise (E1) est maintenu hors de prise du dossier de siège (2), dans lequel, lorsque le dossier de siège (2) est ramené de la position inclinée (P') à la position originelle en rotation (P), le premier mécanisme de mise en prise (E1) peut de nouveau venir en prise avec le siège arrière (2), de manière que le siège arrière (2) puisse être repositionné à la position originelle en rotation (P), et
dans lequel, lorsque le deuxième mécanisme de mise en prise (E2) est mis hors de prise de l'élément fixe (3), le dossier de siège (2) peut être tourné à une position en rotation souhaitée par rapport à l'élément fixe (3), dans laquelle le dossier de siège (2) peut être réglé à la position en rotation souhaitée, par une nouvelle mise en prise du deuxième mécanisme de mise en prise (E2) avec l'élément fixe (3), à la position en rotation souhaitée.

3. Mécanisme d'inclinaison selon la revendication 2, dans lequel le dispositif mémoire (20) comprend un organe rotatif (21), positionné en rotation sur un axe de rotation (10R) du dossier de siège (2) et ayant une encoche de mise en prise (21A) et une dent extérieure (21B) convexe,
dans lequel le premier mécanisme de mise en prise (E1) comprend un organe formant crochet (22), attaché en rotation au dossier de siège (2), de manière à être mis en prise avec, et mis hors de prise de, l'encoche de mise en prise (21A) de l'organe rotatif (21),
dans lequel le deuxième mécanisme de mise en prise (E2) comprend un organe denté (27), attaché en rotation à l'élément fixe (3), de manière à être mis en prise avec, et mis hors de prise de, la dent extérieure (21B) de l'organe rotatif (21),
dans lequel, lorsque le dossier de siège (2) est tourné, de la position originelle en rotation (P) vers la position inclinée (P'), après que l'organe formant crochet (22) ait été mis hors de prise de l'encoche de mise en prise (21A) de l'organe rotatif (21), l'organe formant crochet (22) peut se déplacer le long d'une surface circonférentielle extérieure de l'organe rotatif (21), tout en étant en contact avec lui, de manière que l'organe formant crochet (22) puisse venir en prise avec l'encoche de mise en prise (21A), lorsque le dossier de siège (2) est ramené, de la position inclinée (P') à la position originelle en rotation (P), et
dans lequel l'organe denté (27) est capable de venir en prise avec la dent extérieure (21B) de l'organe rotatif (21), à la position en rotation souhaitée du dossier de siège (2).

4. Mécanisme d'inclinaison selon la revendication 3, dans lequel l'organe denté (27) peut s'engrener avec la dent extérieure (21B) formée dans l'organe rotatif (21), en synchronisme avec un mouvement de verrouillage du dispositif d'inclinaison de siège (10).

5. Mécanisme d'inclinaison selon l'une quelconque des revendications 2 à 4, comprenant en outre un mécanisme de coulissement de siège (non représenté), capable de faire coulisser la totalité du siège vers l'avant, lorsque le premier mécanisme de mise en prise (E1) est mis hors de prise du dossier de siège (2).
